# EUROPÄISCHE PATENTSCHRIFT

(11) **EP 3 480 142 B1**
(45) Veröffentlichungstag und Bekanntmachung des Hinweises auf die Patenterteilung: **03.03.2021**
(21) Anmeldenummer: 18153292.0
(22) Anmeldetag: 24.01.2018
(51) Int. Cl.: B65G 17/20, B65G 19/02, B65G 19/24

(54) **KETTENGLIED, FÖRDERKETTE UND FÖRDERVORRICHTUNG**
CHAIN LINK, CONVEYOR CHAIN AND CONVEYOR APPARATUS
MAILLON DE CHAÎNE, CHAÎNE DE TRANSPORT ET DISPOSITIF DE TRANSPORT

(30) Priorität: 03.11.2017 DE 202017106670 U
(43) Veröffentlichungstag der Anmeldung: 08.05.2019
(73) Patentinhaber: Dematic Logistics GmbH, 33609 Bielefeld (DE)
(72) Erfinder: Otto, Thomas, 33615 Bielefeld (DE)
(74) Vertreter: Moser Götze & Partner Patentanwälte mbB

(56) Entgegenhaltungen:
- EP-A1- 2 128 050
- EP-A1- 2 142 453
- EP-A1- 2 752 378
- US-A- 3 623 538

## Beschreibung

Die vorliegende Erfindung betrifft ein Kettenglied einer Förderkette einer Fördervorrichtung zur Beförderung von an Halteadaptern hängenden Gegenständen gemäß dem Oberbegriff des Anspruchs 1. Die Erfindung betrifft des Weiteren eine Förderkette sowie eine Fördervorrichtung.

Ein gattungsgemäßes Kettenglied einer Förderkette einer Fördervorrichtung ist beispielsweise aus der DE 10 2013 100 132 A1 (oder der EP 2 752 378 A1) bekannt. Solche Fördervorrichtungen werden auch als Schleppkreisförderer oder Power and Free-Förderer bezeichnet.

Die Kettenglieder einer solchen Förderkette sind dabei schwenkbar miteinander verbunden. An der Unterseite eines Basiskörpers des Kettengliedes ist ein jeweiliger als Lamelle bezeichneter Schubkörper angeformt, der mit dem jeweiligen Basiskörper über zwischen den Schubkörper und dem Basiskörper angeformten elastische Stege verbunden ist. Durch die elastischen Stege kann der Schubkörper relativ zum Basiskörper vertikal elastisch nach oben gegen den Basiskörper gedrückt werden, um damit ein Aufstauen von mithilfe der Schubkörper beförderter Halteadapter und an diesen hängenden Gegenständen an vorbestimmten Stellen der Fördervorrichtung zu ermöglichen, ohne die Förderkette zu stoppen.

Dabei wird zum Anhalten eines an dem Halteadapter hängenden Gegenstands nicht die Förderkette angehalten, sondern der Halteadapter wird mithilfe einer Stoppeinrichtung angehalten und dabei von der Förderkette entkoppelt, wobei die Förderkette sich weiterbewegt.

Problematisch bei den hier im Wesentlichen einstückig gefertigten Kettengliedern ist, dass die zwischen dem Basiskörper und dem Schubkörper der Kettenglieder angeformten Kunststoff-Federelemente bei Dauerbelastung mit der Zeit die wirkende Federkraft nachlässt, was ein Mitführen der Halteadapter erschwert.

Nachteilig ist außerdem, dass bei Beschädigung eines Teils eines solchen Kettengliedes hier stets das gesamte Kettenglied ausgetauscht werden muss, was mit einem erhöhten Montageaufwand verbunden ist.

Aufgabe der vorliegenden Erfindung ist es, ein Kettenglied sowie eine Förderkette und eine Fördervorrichtung mit solchen Kettengliedern bereitzustellen, die ein zuverlässiges Befördern der Halteadapter und eine erleichterte Wartung der Kettenglieder bzw. der Kette ermöglicht.

Diese Aufgabe wird durch ein Kettenglied einer Förderkette mit den Merkmalen des Anspruchs 1 gelöst.

Die Aufgabe wird des Weiteren durch eine Förderkette mit den Merkmalen des Anspruchs 15 und durch eine Fördervorrichtung mit den Merkmalen des Anspruchs 16 gelöst.

Das erfindungsgemäße Kettenglied weist einen Basiskörper und einen an einer Unterseite des Basiskörpers vertikal elastisch mit dem Basiskörper verbunden angeordneten Schubkörper auf.

Der Basiskörper weist seitliche Reibrollenandrückflächen auf, an die Reibrollen zum Antrieb der Förderkette andrückbar sind.

An in Förderrichtung voneinander beabstandeten Enden des Basiskörpers sind Kupplungsabschnitte angeformt, die der schwenkbaren Verbindung mit einem Kupplungsabschnitt eines Basiskörpers eines benachbarten Kettenglieds dienen.

Von der Oberseite des Basiskörpers erstreckt sich ein angeformtes Lager zur Lagerung von Lauf- oder Führungsrollen, die in einer Führungsschiene der Fördervorrichtung laufen bzw. geführt werden.

Auf einer Unterseite des Schubkörpers ist mindestens eine Ausnehmung zur Aufnahme eines Koppelstückes eines Kopfteils eines Halteadapters zur Halterung eines zu befördernden Gegenstandes vorgesehen.

Der Schubkörper weist wenigstens einen Haltearm auf, von dem zumindest ein Teilstück in einer Ausnehmung des Basiskörpers vertikal verschiebbar aufgenommen ist.

Zwischen dem Schubkörper und dem Basiskörper ist wenigstens ein Federelement befestigt.

Durch die mehrteilige Ausführung des Kettenglieds mit separatem Basiskörper, Schubkörper und Federelement ist im Falle eines beschädigten oder defekten Bauteils des Kettenglieds, beispielsweise des Schubkörpers, ein Austausch in einfacher Weise ermöglicht, ohne dass das Kettenglied von der Förderkette getrennt werden muss.

Durch die Befestigung eines als separates Bauteil vorgesehenen Federelements zwischen dem Schubkörper und dem Basiskörper ist es mit dem erfindungsgemäßen Kettenglied ermöglicht, je nach Anforderung der zu leistenden Federkraft und/oder der Dauerbeständigkeit das Federelement aus entsprechend geeignetem Material zu fertigen, beispielsweise in Gestalt einer Metallfeder.

Vorteilhafte Ausführungsvarianten der Erfindung sind Gegenstand der Unteransprüche.

Gemäß einer vorteilhaften Ausführungsvariante der Erfindung ist die Ausnehmung als Hohlraum ausgebildet, was eine zuverlässige Führung des Haltearms im Basiskörper gewährleistet.

Gemäß einer weiteren vorteilhaften Ausführungsvariante der Erfindung sind zwischen dem Schubkörper und dem Basiskörper mehrere, insbesondere zwei Federelemente befestigt.

Dies ermöglicht eine gleichmäßige Kraftverteilung zwischen dem Schubkörper und dem Basiskörper.

Zur Begrenzung der Relativbewegung zwischen Basiskörper und Schubkörper ist gemäß einer weiteren vorteilhaften Ausführungsvariante das in der Ausnehmung aufgenommene Teilstück des Haltearms mit einer Rastnase versehen, die eine in der Ausnehmung angeformte Raststufe hintergreift.

Eine solche Raststufe in der Ausnehmung ist in einfacher Weise am Basiskörper des Kettenglieds anformbar und schafft ein Gegenlager für das Federelement, so dass dies unter geringfügiger Vorspannung zwischen dem Basiskörper und dem Schubkörper eingespannt werden kann.

Die wenigstens eine Rastnase ist gemäß einer bevorzugten Ausführungsvariante am freien Ende des Haltearms angeformt.

Gemäß einer weiteren bevorzugten Ausführungsvariante ist zumindest ein Teilstück des Haltearms in Richtung seines freien Endes hin sich konisch verjüngend ausgebildet.

Entsprechend ist bevorzugt die Ausnehmung von einer Unterseite des Basiskörper her in Richtung der Oberseite des Basiskörpers hin zumindest teilweise sich konisch verjüngend ausgebildet.

Dadurch ist eine zuverlässige Führung des Haltearms in der Ausnehmung beim Andrücken des Schubkörpers an den Basiskörper gewährleistet.

Zur Verhinderung eines Einsetzens des Schubkörpers in den Basiskörper in unkorrekter Orientierung steht aus einer Mantelfläche des in der Ausnehmung aufgenommenen Teilstücks des Haltearms wenigstens ein Anschlag vor, der in einen eine Einsetzrichtung des Schubkörpers in den Basiskörper definierenden erweiterten Abschnitt der Ausnehmung vorsteht. Damit ist gewährleistet, dass die ineinander greifenden Schubkörper stets in korrekter Ausrichtung in die Schubkörper eingesetzt werden und so eine korrekte Überlappung von dementsprechend angepassten Enden der Schubkörper zur Kopplung der Schubkörper miteinander sicherstellen.

Der Anschlag dient bevorzugt auch der Verhinderung eines übermäßigen Zusammenstauchens des Federelements, wobei der Anschlag bei Verschiebung des Haltearms in der Ausnehmung in eine obere Endposition an einer Innenwand der Ausnehmung anschlägt.

Zur Festlegung des wenigstens einen Federelements zwischen dem Basiskörper und dem Schubkörper ist gemäß einer weiteren bevorzugten Ausführungsvariante an der der Oberseite des Schubkörpers und/oder der Unterseite des Basiskörpers wenigstens ein Halteelement angeordnet, insbesondere angeformt.

Das wenigstens eine Federelement ist dabei bevorzugt reibschlüssig an dem Halteelement oder den Halteelementen gehalten.

So ist im Falle eines als Schraubenfeder ausgebildeten Federelements das Halteelement bevorzugt als Zylinderstummel ausgebildet.

Das Federelement ist bevorzugt als aus einem Metall gefertigte Schraubenfeder ausgebildet.

Denkbar ist es auch, das Federelement als aus einem elastischen Kunststoff gefertigter Klotz auszubilden, der zwischen dem Schubkörper und dem Basiskörper in einer der Auflagefläche des Klotzes am Schubkörper bzw. am Basiskörper entsprechenden aus der Oberseite des Schubkörpers bzw. der Unterseite des Basiskörpers vorstehenden Umrandung einliegt.

Der Schubkörper selbst ist bevorzugt aus einem mit Gleitschmiermitteln angereicherten Kunststoff gefertigt und ermöglicht so eine hohe Abriebbeständigkeit.

Die Förderkette einer Fördervorrichtung zur Beförderung von an Halteadaptern hängenden Gegenständen mit mehreren schwenkbar miteinander verbundenen Kettengliedern zeichnet sich durch wie oben beschriebene Kettenglieder aus.

Entsprechend zeichnet sich eine Fördervorrichtung zur Beförderung von hängenden Gegenständen mit einem Schienenprofil, einer in dem Schienenprofil in einer Förderrichtung bewegbare, aus mehreren Kettengliedern bestehenden Förderkette, Halteadaptern zur Halterung jeweils eines zu befördernden Gegenstandes durch wie oben beschriebene Kettenglieder aus.

Nachfolgend werden bevorzugte Ausführungsvarianten anhand der beiliegenden Zeichnungen beschrieben.

Es zeigen:
Fig. 1 eine schematische Seitenansicht eines Ausschnitts einer Fördervorrichtung mit Darstellung von Kettengliedern einer Förderkette und mit diesen in Verbindung stehenden Halteadaptern,
Fig. 2 eine schematische Seitenansicht zweier miteinander gekoppelter Kettenglieder,
Fig. 3 eine Schnittansicht durch das in Fig. 2 gezeigte Paar von Kettengliedern zur Darstellung der Anbindung der Schubkörper in die Basiskörper des jeweiligen Kettengliedes,
Fig. 4 und 5 Seitenansichten der beiden Basiskörper der Kettenglieder gemäß Fig. 2,
Fig. 6 eine Seitenansicht eines Schubkörpers,
Fig. 7 eine Ansicht von vorn auf den Schubkörper gemäß Fig. 6 und

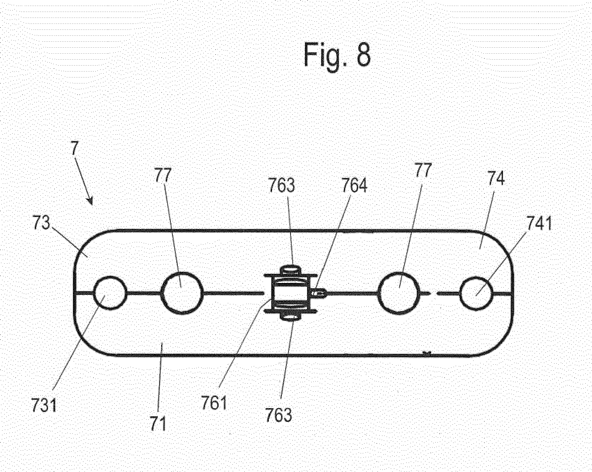

Fig. 8 eine Draufsicht von oben auf den in Fig. 6 gezeigten Schubkörper.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Kettenglieder, Basiskörper, Schubkörper, des Haltearms, der Ausnehmung, des Koppelstücks und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

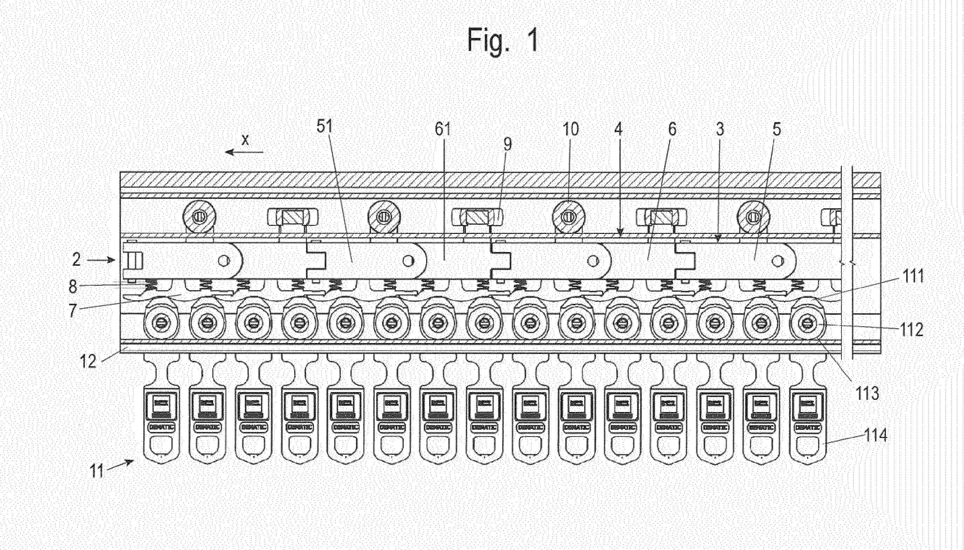

In Fig. 1 ist mit dem Bezugszeichen 2 eine Förderkette 2 einer Fördervorrichtung zur Beförderung von an Halteadaptern 11 hängenden Gegenständen bezeichnet. Die Förderkette 2 ist in einem Schienenprofil 12 aufgenommen.

Zur Bewegung der Förderkette 2 in einer Bewegungsrichtung x sind bei dem hier gezeigten Ausführungsbeispiel der Förderkette 2 an einem ersten Kettenglied 3 ein sich um eine vertikale Achse drehendes Führungsrad 9 befestigt und an einem zweiten Kettenglied 4 ein sich um eine horizontale Achse drehendes Laufrad 10 befestigt.

Die Förderkette 2 besteht aus einer Vielzahl von Kettengliedern 3, 4, die untereinander gelenkig miteinander verbunden sind.

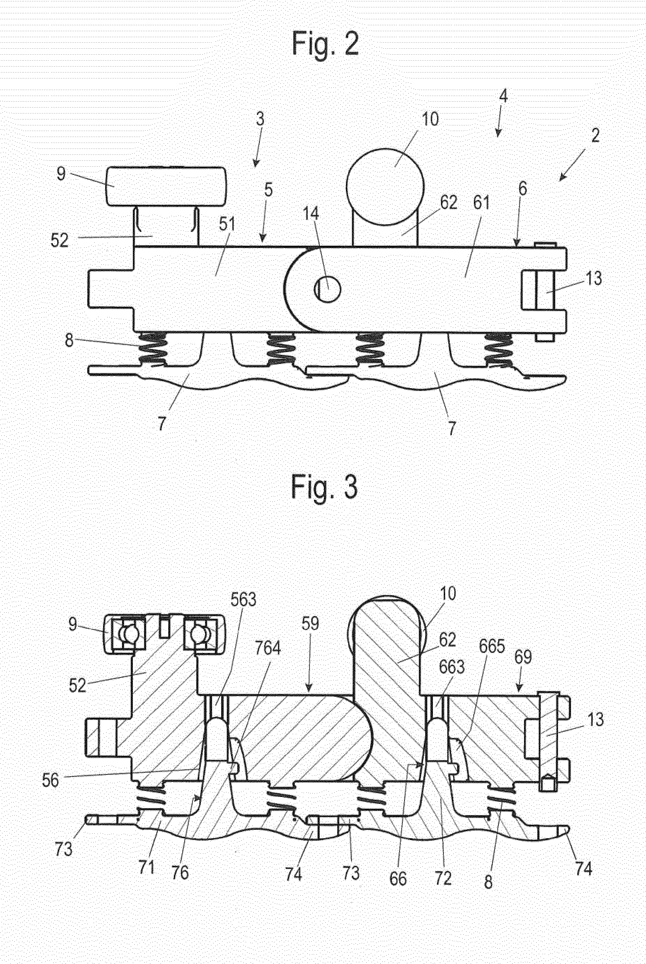

Jedes der Kettenglieder 3, 4 weist, wie auch in den Fig. 2 und 3 dargestellt, einen Basiskörper 5, 6 und einen an einer Unterseite 58, 68 des Basiskörpers 5, 6 vertikal elastisch mit dem Basiskörper 5, 6 verbunden angeordneten Schubkörper 7 auf.

Zur Lagerung der Führungsrolle 9 bzw. der Laufrolle 10 erstreckt sich aus dem jeweiligen Basiskörper 5, 6 von der Oberseite 69, 59 des Basiskörpers 5, 6 jeweils ein Lagerarm 52, 62, an dem jeweils ein Lager 55, 65 angeformt ist, das der Lagerung der sich um eine vertikale Achse drehenden Führungsrolle 9 bzw. der um eine horizontale und sich senkrecht zur Förderrichtung x erstreckenden Achse drehbaren Laufrolle 10 dient.

An einer Unterseite 72 des Schubkörpers 7 ist dabei wenigstens eine Ausnehmung 75 vorgesehen, die der Aufnahme eines Koppelstückes 111 eines Kopfteils 113 eines Halteadapters 11 zur Halterung eines zu befördernden Gegenstandes dient.

Die Halteadapter 11 weisen dabei in der hier gezeigten Ausführungsvariante einen Aufnahmerahmen 114 auf, in dem beispielsweise ein Bügel eingehängt werden kann, der mithilfe der Förderkette 2 in der Förderrichtung x befördert wird.

Oberhalb des Aufnahmerahmens 14 ist ein Kopfteil 113 angeformt, an dem eine Laufrolle 112 um eine horizontale Drehachse drehbar befestigt ist. Die Laufrolle 112 ist dabei ebenfalls in dem Schienenprofil 6 in einer dazu vorgesehenen Laufbahn aufgenommen. Dass der Förderkette 2 zugewandte obere Ende des Kopfteils 113 ist als Koppelstück 111 ausgeführt, das vorzugsweise reibschlüssig in der Ausnehmung 75 des Schubkörpers 7 aufgenommen ist.

Wird einer der Halteadapter 11 infolge einer Aufstauung an einer vorbestimmten Position der Fördervorrichtung angehalten, kann das Koppelstück 111 des Kopfteils 113 aus der Ausnehmung 75 des Schubkörpers 7 herausgleiten und so die Förderverbindung zwischen dem Halteadapter 11 und dem jeweiligen Kettenglied 3, 4 der Förderkette 2 trennen. Die Trennung erfolgt dabei dadurch, dass der Schubkörper 7 um die Tiefe der Ausnehmung 75 in Richtung des Basiskörpers 5, 6 des jeweiligen Kettenglieds 3, 4 nach oben gedrückt wird, was durch die vertikale elastische Verkopplung des Schubkörpers 7 mit dem Basiskörper 5, 6 ermöglicht ist.

Um die Förderkette 2 durch Kurvenbereiche des Schienenprofils 12 bewegen zu können, sind an in Förderrichtung x voneinander beabstandeten Enden des Basiskörpers 5, 6 angeformte Kupplungsabschnitte 53, 54, 63, 64 angeformt, die der schwenkbaren Verbindung mit einem Kupplungsabschnitt 53, 54, 63, 64 eines Basiskörpers 5, 6 eines benachbarten Kettenglieds 3, 4 dienen.

Zur Verschwenkung benachbarter Kettenglieder 3, 4 zueinander in einer horizontalen Ebene sind dabei die einander benachbarten Kupplungsabschnitte 54, 64 ineinander schiebbar ausgeführt und über einen Verbindungsbolzen 13, der durch jeweilige sich vertikal durch die Kupplungsabschnitte 54, 64 erstreckende Bohrungen 641, 541 miteinander gekoppelt.

Zur Verschwenkung benachbarter Kettenglieder 3, 4 um eine horizontale Drehachse sind am jeweiligen gegenüberliegenden Kupplungsabschnitt jedes der Kettenglieder 3, 4 die Kupplungsabschnitte 53, 63 so ausgeführt, dass diese in einer vertikalen Ebene einander überlappen und durch einen Verbindungsbolzen, der sich durch jeweilige sich horizontal durch die Kupplungsabschnitte 53, 63 erstreckende Bohrungen 531, 631 miteinander verbunden.

Zur federelastischen Kopplung des Schubkörpers 7 mit dem jeweiligen Kettenglied 3, 4 weist der Schubkörper 7 wenigstens einen Haltearm 76 auf, von dem zumindest ein Teilstück in einer Ausnehmung 56, 66 des Basiskörpers 5, 6 vertikal verschiebbar aufgenommen ist.

Zwischen dem Schubkörper 7 und dem Basiskörper 5, 6 ist dabei wenigstens ein Federelement 8 befestigt.

Das Federelement 8 ist dabei in der hier gezeigten Ausführungsvariante als aus einem Metall gefertigte Schraubenfeder, insbesondere Schraubendruckfeder ausgebildet.

Denkbar sind aber auch andere Ausgestaltungen eines solchen Federelements 8, beispielsweise in Gestalt eines federelastischen Klotzes, der zwischen Schubkörper 7 und Basiskörper 5, 6 befestigt, insbesondere lösbar befestigt ist.

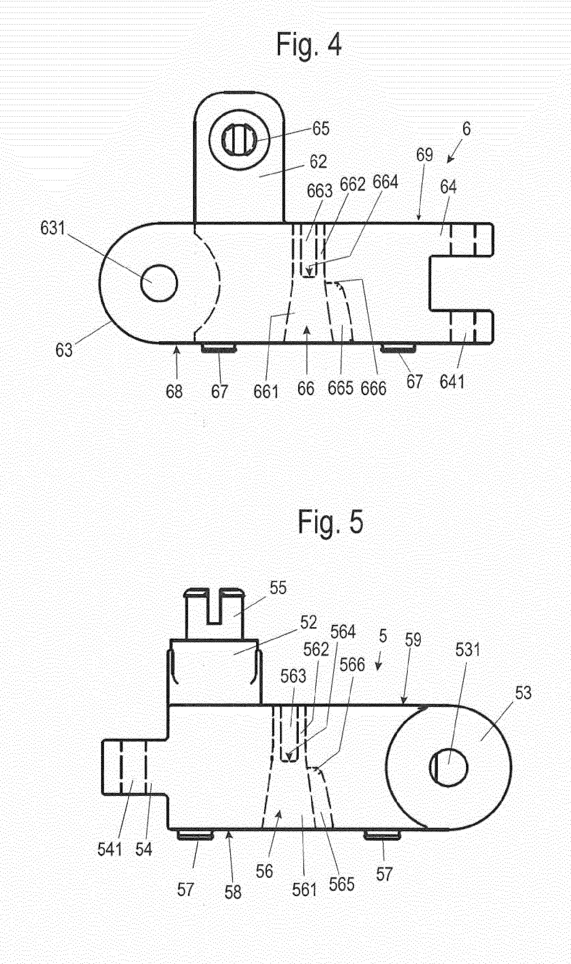

Wie in den Fig. 3 bis 5 gezeigt, ist die Ausnehmung 56, 66 des Basiskörpers 5, 6 als Hohlraum ausgebildet, welcher in der hier gezeigten Ausführungsvariante etwa zentral in dem sich in Längsrichtung der Förderkette 2 erstreckenden Basiskörper 5, 6 eingebracht ist.

Die Ausnehmung 56, 66 ist dabei bevorzugt, wie in den Fig. 3 bis 5 gezeigt ist, von einer Unterseite 58, 68 des Basiskörpers 5, 6 her in Richtung der Oberseite 59, 69 des Basiskörpers 5, 6 hin zumindest teilweise sich konisch verjüngend ausgebildet.

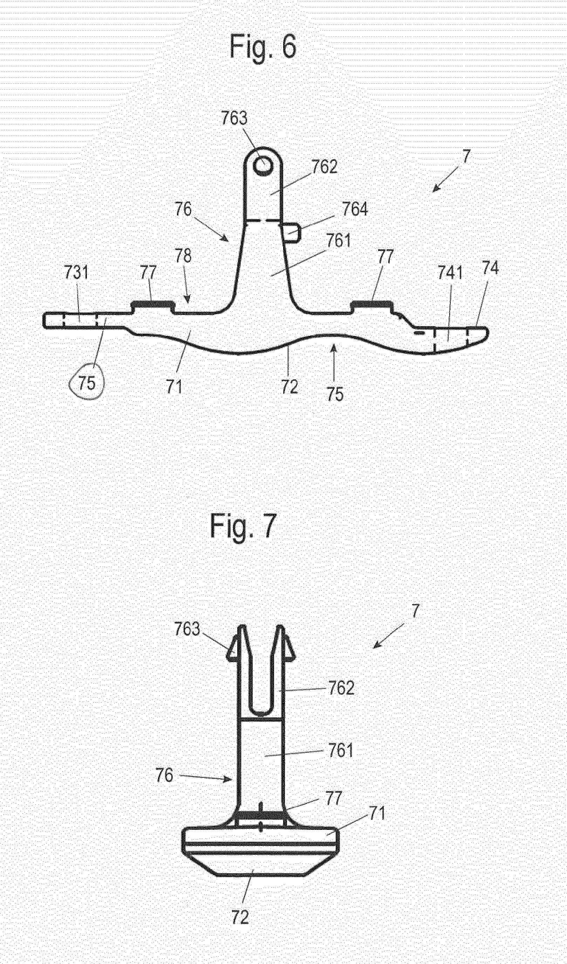

Entsprechend ist auch der Haltearm 76, wie in den Fig. 3 und 6 dargestellt ist in Richtung seines freien Endes hin sich konisch verjüngend ausgebildet. Durch den relativ zu seinem freien Ende breiten, in einem Anlagesteg 71 des Schubkörpers 7 mündenden Fuß des Haltearms 76 ist die Formstabilität des Schubkörpers 7 gewährleistet.

Der sich nach oben konisch verjüngende Abschnitt 661, 561 der Ausnehmung 56, 66 hat darüber hinaus den Vorteil, dass ein Verklemmen des Haltearms 76 in der Ausnehmung 56, 66 vermieden wird.

Um einen maximalen Abstand zwischen dem Anlagesteg 71 des Schubkörpers 7 und der Unterseite des Basiskörpers 5, 6 zu definieren, weist das in der Ausnehmung 56, 66 aufgenommene Teilstück des Haltearms 76 zur Begrenzung der Relativbewegung zwischen Basiskörper 5, 6 und Schubkörper 7 wenigstens eine Rastnase 763 auf, die eine in der Ausnehmung 56, 66 angeformte Raststufe 564, 664 hintergreift.

Im gezeigten Ausführungsbeispiel sind am freien Ende des Haltearms 76 des Schubkörpers 7 zwei solcher Rastnasen 763 angeformt, die in entsprechenden Kanälen 563, 663 als Teil der Ausnehmungen 56, 66 verschiebbar sind und durch den als Raststufe 564, 664 ausgeführten Kanalende die Bewegung des Anlagestegs 71 weg von dem Basiskörper 5, 6 begrenzen. Die Rastnasen 763 sind dabei in der hier gezeigten Ausführungsvariante senkrecht zur Bewegungsrichtung x der Förderkette 2 ausgerichtet.

Zur Verhinderung eines übermäßigen Stauchens der Federelemente 8 steht, wie in den Fig. 3 bis 6 gezeigt, aus einer Mantelfläche des in der Ausnehmung 56, 66 aufgenommenen Teilstücks des Haltearms 76 zur Begrenzung der Relativbewegung zwischen Basiskörper 5, 6 und Schubkörper 7 wenigstens ein Anschlag 764 vor, der bei Verschiebung des Haltearms 76 in der Ausnehmung 56, 66 in eine obere Endposition an einer Innenwand 566, 666 der Ausnehmung 56, 66 anschlägt.

Zur Führung dieses Anschlags 764 ist der sich konisch verjüngende Teil 661, 561 der Ausnehmungen 56, 66 in Richtung des vorstehenden Anschlags 764 um einen erweiterten Ausschnitt 665 erweitert.

Dieser Ausschnitt 565, 665 ist dabei bevorzugt als Führungsnut zur Aufnahme des Anschlags 764 ausgebildet und dient in erster Linie der korrekten Orientierung der Schubkörper 7 beim Einsetzen in die Basiskörper 5, 6.

Bei in korrekter Orientierung in den Basiskörpern 5, 6 gehaltenen Schubkörpern7 überlappt stets ein an einem ersten Ende des Anlagestegs 71 angeformter vorderer Überlappungsabschnitt 73 eines ersten Schubkörpers 7 mit einem in Bewegungsrichtung x davor angeordneten, am anderen Ende des Anlagestegs 71 angeformten hinteren Überlappungsabschnitt 74 eines zweiten Schubkörpers 7, so dass derart die Schubkörper 7 miteinander gekoppelt sind.

Zur lösbaren Festlegung der Federelemente 8 an dem Basiskörper 5, 6 und dem Schubkörper 7 sind in den hier gezeigten Ausführungsvarianten an der Oberseite 78 des Schubkörpers 7 und an der Unterseite 58, 68 des Basiskörpers 5, 6 Halteelemente 57, 67, 77 zur Festlegung der Federelements 8 angeordnet, insbesondere angeformt.

Bei Ausführung der Federelemente 8 als Schraubenfedern sind die Halteelemente 57, 67, 77 bevorzugt als zylindrische Stummel ausgeführt.

Je nach Formgestalt der Federelemente 8 sind jedoch auch andere Gestaltungen dieser Halteelemente 57, 67, 77 denkbar.

Jedes der Federelemente 8 ist dabei bevorzugt reibschlüssig an dem Halteelement 57, 67, 77 gehalten.

Die hier als Schraubenfedern ausgebildeten Federelemente 8 sind dabei zwischen einander gegenüberliegend angeordneten Halteelementen 57, 67, 77 an der Unterseite des Basiskörpers 5, 6 und der Oberseite 78 des Schubkörpers 7 unter Vorspannung eingeklemmt und mit randseitigen Windungen reibschlüssig auf das als Zylinderstummel ausgebildete Halteelement 57, 67, 77 aufgestülpt.

Der Schubkörper 7 ist bevorzugt aus einem mit Gleitschmiermittel angereicherten Kunststoff gefertigt.

Die Unterseite des Schubkörpers 7 ist in der hier gezeigten Ausführungsvariante wellenförmig geformt mit jeweils einer Ausnehmung 75 zur Aufnahme eines Koppelstücks 111 eines Halteadapters 11.

### Bezugszeichenliste

- 2: Förderkette
- 3: Kettenglied
- 4: Kettenglied

- 5: Basiskörper
- 51: Reibrollenandrückfläche
- 52: Lagerarm
- 53: Kupplungsabschnitt
- 531: Bohrung
- 54: Kupplungsabschnitt
- 541: Bohrung
- 55: Lager
- 56: Ausnehmung
- 561: konischer Abschnitt
- 562: Längsausnehmung
- 563: Querausnehmung
- 564: Raststufe
- 565: erweiterter Abschnitt
- 566: Innenwand
- 57: Halteelement
- 58: Unterseite
- 59: Oberseite

- 6: Basiskörper
- 61: Reibrollenandrückfläche
- 62: Lagerarm
- 63: Kupplungsabschnitt
- 631: Bohrung
- 64: Kupplungsabschnitt
- 641: Bohrung
- 65: Lager
- 66: Ausnehmung
- 661: konischer Abschnitt
- 662: Längsausnehmung
- 663: Querausnehmung
- 664: Raststufe
- 665: erweiterter Abschnitt
- 666: Innenwand
- 67: Halteelement
- 68: Unterseite
- 69: Oberseite

- 7: Schubkörper
- 71: Anlagesteg
- 72: Unterseite
- 73: Überlappungsabschnitt
- 731: Bohrung
- 74: Überlappungsabschnitt
- 741: Bohrung
- 75: Ausnehmung
- 76: Haltearm
- 761: Teilstück
- 762: freies Ende
- 763: Rastnase
- 764: Anschlag
- 77: Halteelement

- 8: Federelement
- 9: Führungsrolle
- 10: Laufrolle

- 11: Halteadapter
- 111: Koppelstück
- 112: Laufrolle
- 113: Kopfteil
- 114: Aufnahmerahmen

- 12: Schienenprofil
- x: Förderrichtung

## Patentansprüche

1. Kettenglied (3, 4) einer Förderkette (2) einer Fördervorrichtung zur Beförderung von an Halteadaptern (11) hängenden Gegenständen, aufweisend
- einen Basiskörper (5, 6) und
- einen an einer Unterseite des Basiskörpers (5, 6) vertikal elastisch mit dem Basiskörper (5, 6) verbunden angeordneten Schubkörper (7),
- wobei der Basiskörper (5, 6) aufweist:
∘ seitliche Reibrollenandrückflächen (51, 61), an die Reibrollen zum Antrieb der Förderkette (2) andrückbar sind,
∘ an in Förderrichtung (x) voneinander beabstandeten Enden des Basiskörpers (5, 6) angeformte Kupplungsabschnitte (53, 54, 63, 64) zur schwenkbaren Verbindung mit einem Kupplungsabschnitt (53, 54, 63, 64) eines Basiskörpers (5, 6) eines benachbarten Kettenglieds (3, 4) sowie
∘ ein sich von einer Oberseite (59, 69) des Basiskörpers (5, 6) erstreckendes angeformtes Lager (55, 65) zur Lagerung von Lauf- oder Führungsrollen (9, 10),
- wobei auf einer Unterseite (72) des Schubkörpers (7) mindestens eine Ausnehmung (75) zur Aufnahme eines Koppelstückes (111) eines Kopfteils (113) eines Halteadapters (11) zur Halterung eines zu befördernden Gegenstandes vorgesehen ist
- wobei zwischen dem Schubkörper (7) und dem Basiskörper (5, 6) wenigstens ein Federelement (8) befestigt ist,
**dadurch gekennzeichnet, dass**
- der Schubkörper (7) wenigstens einen Haltearm (76) aufweist, von dem zumindest ein Teilstück in einer Ausnehmung (56, 66) des Basiskörpers (5, 6) vertikal verschiebbar aufgenommen

2. Kettenglied (3, 4) nach Anspruch 1, **dadurch gekennzeichnet, dass** die Ausnehmung (56, 66) als Hohlraum ausgebildet ist.

3. Kettenglied (3, 4) nach Anspruch 1 oder 2, **dadurch gekennzeichnet, dass** zwischen dem Schubkörper (7) und dem Basiskörper (5, 6) mehrere, insbesondere zwei Federelemente (8) befestigt sind.

4. Kettenglied (3, 4) nach Anspruch 2 oder 3, **dadurch gekennzeichnet, dass** das in der Ausnehmung (56, 66) aufgenommene Teilstück des Haltearms (76) zur Begrenzung der Relativbewegung zwischen Basiskörper (5, 6) und Schubkörper (7) wenigstens eine Rastnase (763) aufweist, die eine in der Ausnehmung (56, 66) angeformte Raststufe (564, 664) hintergreift.

5. Kettenglied (3, 4) nach Anspruch 4, **dadurch gekennzeichnet, dass** die wenigstens eine Rastnase (763) am freien Ende des Haltearms (76) angeformt ist.

6. Kettenglied (3, 4) nach einem der vorstehenden Ansprüche, **dadurch gekennzeichnet, dass** zumindest ein Teilstück (761) des Haltearm (76) in Richtung seines freien Endes hin sich konisch verjüngend ausgebildet ist.

7. Kettenglied (3, 4) nach Anspruch 6, **dadurch gekennzeichnet, dass** die Ausnehmung (56, 66) von einer Unterseite (58, 68) des Basiskörper (5, 6) her in Richtung der Oberseite (59, 69) des Basiskörpers (5, 6) hin zumindest teilweise sich konisch verjüngend ausgebildet ist.

8. Kettenglied (3, 4) nach einem der vorstehenden Ansprüche, **dadurch gekennzeichnet, dass** aus einer Mantelfläche des in der Ausnehmung (56, 66) aufgenommenen Teilstücks des Haltearms (76) wenigstens ein Anschlag (764) vorsteht, der in einen eine Einsetzrichtung des Schubkörpers (7) in den Basiskörper (5, 6) definierenden erweiterten Abschnitt (565, 665) der Ausnehmung (56, 66) vorsteht.

9. Kettenglied (3, 4) nach Anspruch 8, **dadurch gekennzeichnet, dass** der Anschlag (764) bei Verschiebung des Haltearms (76) in der Ausnehmung (56, 66) in eine obere Endposition an einer Innenwand (566, 666) der Ausnehmung (56, 66) anschlägt.

10. Kettenglied (3, 4) nach einem der vorstehenden Ansprüche, **dadurch gekennzeichnet, dass** an der Oberseite (78) des Schubkörpers (7) und/oder der Unterseite (58, 68) des Basiskörpers (5, 6) wenigstens ein Halteelement (57, 67, 77) zur Festlegung des wenigstens einen Federelements (8) angeordnet, insbesondere angeformt ist.

11. Kettenglied (3, 4) nach Anspruch 10, **dadurch gekennzeichnet, dass** das wenigstens eine Federelement (8) reibschlüssig an dem Halteelement (57, 67, 77) oder den Halteelementen (57, 67, 77) gehalten ist.

12. Kettenglied (3, 4) nach einem der vorstehenden Ansprüche, **dadurch gekennzeichnet, dass** das Federelement (8) als aus einem Metall gefertigte Schraubenfeder ausgebildet ist.

13. Kettenglied (3, 4) nach einem der vorstehenden Ansprüche 1 bis 11, **dadurch gekennzeichnet, dass** das Federelement (8) als aus einem elastischen Kunststoff gefertigter Klotz ausgebildet ist.

14. Kettenglied (3, 4) nach einem der vorstehenden Ansprüche, **dadurch gekennzeichnet, dass** der Schubkörper (7) aus einem mit Gleitschmiermitteln angereicherten Kunststoff gefertigt ist.

15. Förderkette (2) einer Fördervorrichtung zur Beförderung von an Halteadaptern (11) hängenden Gegenständen mit mehreren schwenkbar miteinander verbundenen Kettengliedern (3, 4), **dadurch gekennzeichnet, dass** die Kettenglieder (3, 4) gemäß einem der vorstehenden Ansprüche ausgebildet sind.

16. Fördervorrichtung zur Beförderung von hängenden Gegenständen, aufweisend ein Schienenprofil (12), eine in dem Schienenprofil (12) in einer Förderrichtung (x) bewegbare, aus mehreren Kettengliedern (3, 4) bestehende Förderkette (2), Halteadapter (11) zur Halterung jeweils eines zu befördernden Gegenstandes, wobei jedes der Kettenglieder (3, 4) einen Basiskörper (5, 6) mit seitlichen Reibrollenandrückflächen (51, 61) aufweist, an die Reibrollen zum Antrieb der Förderkette (2) andrückbar sind, sowie Schubkörper (7), die an einer Unterseite der Basiskörper (211, 221) angeordnet sind, wobei die Halteadapter (11) jeweils ein in dem Schienenprofil (12) rollbar gelagertes Kopfteil (113) aufweisen, das mit jeweils einem der Schubelemente (7) koppelbar ist, **dadurch gekennzeichnet, dass** die Kettenglieder (3, 4) gemäß einem der vorstehenden Ansprüche 1 bis 14 ausgebildet sind.

## Claims

1. Chain link (3, 4) of a conveyor chain (2) of a conveyor apparatus for conveying objects suspended from holding adapters (11), having
- a base body (5, 6) and
- a push body (7) which is arranged on an underside of the base body (5, 6) so as to be connected in a vertically elastic manner to the base body (5, 6),
- wherein the base body (5, 6) comprises:
• lateral friction roller press surfaces (51, 61), against which friction rollers can be pressed for driving the conveyor chain (2),
• coupling portions (53, 54, 63, 64) which are integrally formed on ends of the base body (5, 6) spaced apart from one another in the conveyance direction (x) for pivotably connecting to a coupling portion (53, 54, 63, 64) of a base body (5, 6) of an adjacent chain link (3, 4), and
• an integrally formed bearing (55, 65) which extends from an upper side (59, 69) of the base body (5, 6) for supporting running or guiding rollers (9, 10),
- wherein provided on an underside (72) of the push body (7) is at least one recess (75) for receiving a coupling piece (111) of a head part (113) of a holding adapter (11) for holding an object to be conveyed,
- wherein at least one spring element (8) is fastened between the push body (7) and the base body (5, 6)
**characterised in that**
- the push body (7) has at least one holding arm (76), of which at least one section is received in a vertically displaceable manner in a recess (56, 66) of the base body (5, 6).

2. Chain link (3, 4) as claimed in claim 1, **characterised in that** the recess (56, 66) is formed as a hollow space.

3. Chain link (3, 4) as claimed in claim 1 or 2, **characterised in that** a plurality of, in particular two, spring elements (8) are fastened between the push body (7) and the base body (5, 6).

4. Chain link (3, 4) as claimed in claim 2 or 3, **characterised in that** the section of the holding arm (76) received in the recess (56, 66) and intended to limit the relative movement between the base body (5, 6) and the push body (7) has at least one latching lug (763) which engages behind a latching step (564, 664) integrally formed in the recess (56, 66).

5. Chain link (3, 4) as claimed in claim 4, **characterised in that** the at least one latching lug (763) is integrally formed on the free end of the holding arm (76).

6. Chain link (3, 4) as claimed in any one of the preceding claims, **characterised in that** at least one section (761) of the holding arm (76) is formed so as to taper conically in the direction towards its free end.

7. Chain link (3, 4) as claimed in claim 6, **characterised in that** the recess (56, 66) is formed so as to taper conically at least partially from an underside (58, 68) of the base body (5, 6) in the direction towards the upper side (59, 69) of the base body (5, 6).

8. Chain link (3, 4) as claimed in any one of the preceding claims, **characterised in that** at least one stop (764) protrudes from a peripheral surface of the section of the holding arm (76) received in the recess (56, 66), said stop protruding into a widened portion (565, 665) of the recess (56, 66) which defines a direction of insertion of the push body (7) into the base body (5, 6).

9. Chain link (3, 4) as claimed in claim 8, **characterised in that**, during displacement of the holding arm (76) in the recess (56, 66) to an upper end position, the stop (764) strikes against an inner wall (566, 666) of the recess (56, 66).

10. Chain link (3, 4) as claimed in any one of the preceding claims, **characterised in that** at least one holding element (57, 67, 77) for fixing the at least one spring element 8 is arranged, in particular integrally formed, on the upper side (78) of the push body (7) and/or the underside (58, 68) of the base body (5, 6).

11. Chain link (3, 4) as claimed in claim 10, **characterised in that** the at least one spring element (8) is held in a frictionally engaged manner on the holding element (57, 67, 77) or the holding elements (57, 67, 77).

12. Chain link (3, 4) as claimed in any one of the preceding claims, **characterised in that** the spring element (8) is formed as a helical spring manufactured from a metal.

13. Chain link (3, 4) as claimed in any one of the preceding claims 1 to 11, **characterised in that** the spring element (8) is formed as a block which is manufactured from an elastic synthetic material.

14. Chain link (3, 4) as claimed in any one of the preceding claims, **characterised in that** the push body (7) is manufactured from a synthetic material provided with lubricants.

15. Conveyor chain (2) of a conveyor apparatus for conveying objects suspended from holding adapters (11), comprising a plurality of chain links (3, 4) pivotably connected to one another, **characterised in that** the chain links (3, 4) are formed according to any one of the preceding claims.

16. Conveyor apparatus for conveying suspended objects, having a rail profile (12), a conveyor chain (2) which can be moved in the rail profile (12) in a conveyance direction (x) and consists of a plurality of chain links (3, 4), holding adapters (11) for holding in each case an object to be conveyed, wherein each of the chain links (3, 4) has a base body (5, 6) with lateral friction roller press surfaces (51, 61), against which friction rollers can be pressed for driving the conveyor chain (2), and push bodies (7) which are arranged on an underside of the base bodies (211, 221), wherein the holding adapters (11) each have a head part (113) which is mounted so as to be able to roll in the rail profile (12) and can be coupled to one of the push elements (7) in each case, **characterised in that** the chain links (3, 4) are formed according to any one of the preceding claims 1 to 14.

## Revendications

1. Maillon de chaîne (3, 4) d'une chaîne de transport (2) d'un dispositif de transport destiné à transporter des objets suspendus à des adaptateurs de retenue (11), ledit maillon de chaîne comportant
- un corps de base (5, 6) et
- un corps de poussée (7) disposé sur un côté inférieur du corps de base (5, 6) en étant relié de manière verticalement élastique au corps de base (5, 6),
- le corps de base (5, 6) comportant:
∘ des surfaces de pression de rouleaux de friction latérales (51, 61) sur lesquelles des rouleaux de friction peuvent être pressés pour entraîner la chaîne de transport (2),
∘ des portions d'accouplement (53, 54, 63, 64) moulées sur des extrémités du corps de base (5, 6), qui sont espacées l'une de l'autre dans la direction de transport (x), et destinées être reliées de manière pivotante à une portion d'accouplement (53, 54, 63, 64) d'un corps de base (5, 6) d'un maillon de chaîne adjacent (3, 4) ainsi que
∘ un palier moulé (55, 65) s'étendant depuis un côté supérieur (59, 69) du corps de base (5, 6) et destiné au montage de rouleaux de roulement ou de guidage (9, 10),
- au moins un évidement (75) destiné à recevoir une pièce d'accouplement (111) d'une partie de tête (113) d'un adaptateur de retenue (11) pour retenir un objet à transporter étant ménagé sur un côté inférieur (72) du corps de poussée (7),
- au moins un élément à ressort (8) étant fixé entre le corps de poussée (7) et le corps de base (5, 6),
**caractérisé en ce que**
- le corps de poussée (7) comporte au moins un bras de retenue (76) dont au moins une partie est reçue dans un évidement (56, 66) du corps de base (5, 6) de manière à pouvoir coulisser verticalement.

2. Maillon de chaîne (3, 4) selon la revendication 1, **caractérisé en ce que** l'évidement (56, 66) est réalisé sous la forme d'une cavité.

3. Maillon de chaîne (3, 4) selon la revendication 1 ou 2, **caractérisé en ce que** plusieurs, notamment deux, éléments élastiques (8) sont fixés entre le corps de poussée (7) et le corps de base (5, 6).

4. Maillon de chaîne (3, 4) selon la revendication 2 ou 3, **caractérisé en ce que**, pour limiter le mouvement relatif entre le corps de base (5, 6) et le corps de poussée (7), la partie du bras de retenue (76) qui est reçue dans l'évidement (56, 66) comporte au moins un ergot d'encliquetage (763) qui s'engage derrière un gradin d'encliquetage (564, 664) moulé dans l'évidement (56, 66).

5. Maillon de chaîne (3, 4) selon la revendication 4, **caractérisé en ce que** l'au moins un ergot d'encliquetage (763) est moulé sur l'extrémité libre du bras de retenue (76).

6. Maillon de chaîne (3, 4) selon l'une des revendications précédentes, **caractérisé en ce qu'**au moins une partie (761) du bras de retenue (76) est conçue de manière à s'amincir en cône en direction de son extrémité libre.

7. Maillon de chaîne (3, 4) selon la revendication 6, **caractérisé en ce que** l'évidement (56, 66) est conçue au moins partiellement de manière à s'amincir en cône depuis un côté inférieur (58, 68) du corps de base (5, 6) en direction du côté supérieur (59, 69) du corps de base (5, 6).

8. Maillon de chaîne (3, 4) selon l'une des revendications précédentes, **caractérisé en ce qu'**au moins une butée (764) fait saillie d'une surface latérale de la partie du bras de retenue (76) qui est reçue dans l'évidement (56, 66), laquelle butée fait saillie dans une portion agrandie (565, 665) de l'évidement (56, 66) qui définit un sens d'insertion du corps de poussée (7) dans le corps de base (5, 6).

9. Maillon de chaîne (3, 4) selon la revendication 8, **caractérisé en ce que**, lors du déplacement du bras de retenue (76) dans l'évidement (56, 66) jusque dans une position d'extrémité supérieure, la butée (764) bute sur une paroi intérieure (566, 666) de l'évidement (56, 66).

10. Maillon de chaîne (3, 4) selon l'une des revendications précédentes, **caractérisé en ce qu'**au moins un élément de retenue (57, 67, 77) destiné à la fixation de l'au moins un élément à ressort (8) est disposé, en particulier moulé, sur le côté supérieur (78) du corps de poussée (7) et/ou le côté inférieur (58, 68) du corps de base (5, 6).

11. Maillon de chaîne (3, 4) selon la revendication 10, **caractérisé en ce que** l'au moins un élément à ressort (8) est retenu par friction sur l'élément de retenue (57, 67, 77) ou les éléments de retenue (57, 67, 77).

12. Maillon de chaîne (3, 4) selon l'une des revendications précédentes, **caractérisé en ce que** l'élément à ressort (8) est réalisé sous la forme d'un ressort hélicoïdal en métal.

13. Maillon de chaîne (3, 4) selon l'une des revendications 1 à 11 précédentes, **caractérisé en ce que** l'élément à ressort (8) est réalisé sous la forme d'un bloc réalisé en matière synthétique élastique.

14. Maillon de chaîne (3, 4) selon l'une des revendications précédentes, **caractérisé en ce que** le corps de poussée (7) est réalisé à partir d'une matière synthétique enrichie en lubrifiants de glissement.

15. Chaîne de transport (2) d'un dispositif de transport destiné à transporter des objets, suspendus à des adaptateurs de retenue (11), et comprenant une pluralité de maillons de chaîne (3, 4) reliés entre eux de manière pivotante, **caractérisée en ce que** les maillons de chaîne (3, 4) sont conçus selon l'une des revendications précédentes.

16. Dispositif de transport destiné à transporter des objets suspendus, ledit dispositif de transport comprenant un profilé de rail (12), une chaîne de transport (2) qui peut être déplacée dans une direction de transport (x) dans le profilé de rail (12) et qui comprend plusieurs maillons de chaîne (3, 4), et des adaptateurs de retenue (11) destinés chacun à retenir un objet à transporter, chacun des maillons de chaîne (3, 4) comportant un corps de base (5, 6) pourvu de surfaces de pression de rouleaux de friction latérales (51, 61) sur lesquelles des rouleaux de friction peuvent être pressés pour entraîner la chaîne de transport (2), ainsi que des corps de poussée (7) qui sont disposés sur un côté inférieur des corps de base (211, 221), les adaptateurs de retenue (11) comportant chacun une partie de tête (113) qui est montée de manière roulante dans le profilé de rail (12) et qui peut être accouplée à l'un des éléments de poussée (7), **caractérisé en ce que** les maillons de chaîne (3, 4) sont conçus selon l'une des revendications précédentes 1 à 14.
